# EUROPEAN PATENT APPLICATION

(11) **EP 1 445 276 A1**
(43) Date of publication of application: **11.08.2004**
(21) Application number: 04001635.4
(22) Date of filing: 27.01.2004
(51) Int. Cl.: C08J 9/14

(54) **Foaming compositions**

(30) Priority: 06.02.2003 IT mi20030198
(71) Applicant: Solvay Solexis S.p.A., 20121 Milano (IT)
(72) Inventor: Nicoletti, Alberto, 20092 Cinisello Balsamo Milano (IT); Bragante, Letanzio, 35020 Dur Carrare Padova (IT); Basile, Giampiero, 15100 Alessandria (IT)
(74) Representative: Sama, Daniele, Dr.

(57) **Abstract**

Foaming compositions comprising the following compounds:
A) hydrofluorocarbons of formula:

   CₙHₘFₚ (A)

   wherein:
   - n is an integer equal to 2 or 3;
   - p is an integer equal to 4 or 5;
   - m + p = 2n + 2 -p;
   when n = 2 p = 4 or 5; when n = 3, p = 5;
B) dimethoxymethane.

## Description

The present invention relates to mixture to be used as foaming agents of polymeric foams, in particular polyurethane foams.

More specifically the present invention relates to mixtures to be used as substitutes of HFC 141b to obtain polymeric foams, in particular polyurethane foams, having improved properties as regards the substantial maintenance in the time of the thermoinsulating properties, in particular of the thermal conductivity.

As known, thermosetting foams, for example polyurethane and thermoplastic foams, are used in the cold thermal insulation and in building insustry.

It is known in the prior art to obtain stiff polyurethanes having a closed cell structure with high thermoinsulating performances by using HFC 141b-based formulations. Alternatively, technologies using cheap hydrocarbon foaming agents but flammable, for example pentanes, can be used. The drawback of hydrocarbon foaming agents in polyurethane foams is that they do not reach the performances obtained with HCFC 141b.

Due to the newly regulations, the HCFC use will be more and more limited since they decrease the ozone and therefore it is necessary to find substitutes to prepare foaming agents with zero ODP. Therefore HCFC 141b must be substituted.

Hydrofluorocarbons (HFC) have zero ODP and therefore they could be used as substitutes of HCFC 141b in the polymeric foam. It is however already known the use of some HFCs having two carbon atoms, alone or in admixture, as substitute for example of the dichloro-difluoromethane CCl₂F₂ (R12); chloro-difluoromethane CHClF₂ (R22) compounds; the mixture 48.8/51.2 chloro-difluoromethane CHClF₂ (R22)/1-chloro-1,1, 2, 2, 2pentafluoroethane CClF₂-CF₃ (R115) (R502) . Among the HFCs used for this purpose it can for example be mentioned 1,1difluoroethane CHF₂-CH₃ (HFC 152a), difluoromethane CH₂F₂ (HFC 32), 1,1,1-trifluoroethane CF₃-CH₃ (HFC 143a), 1,1,1,2,2 pentafluoroethane CF₃-CHF₂ (HFC 125), 1,1,1,2-tetrafluoroethane CH₂F-CF₃ (HFC 134a). However the HFC 152a, HFC 32, HFC 143a compounds have the drawback to be flammable, wherefor HFC 134a and HFC 125, which are not flammable and are the most commercially diffused, are preferably used. In particular HFC 134a is the most used foaming agent in admixture with other fluids to form polymeric, also thermosetting, foams. As substitute of HCFC 141b some HFCs having three or four carbon atms can also be used, as for example, 1,1,1,2,2-pentafluoropropane CF₃-CF₂-CH₃ (HFC 245fa) and 1,1,1,2,2-pentafluorobutane CF₃-CF₂-CH₂-CH₃ (HFC 365mfc). However their availability on the market is still limited and the cost is relatively high. Furthermore HFC 365mfc has the drawback to be partially flammable. Among the above HFCs those potentially capable to replace HCFC 141b could be the following: HFC 134a, HFC 125, HFC 245fa. However these foaming agents have the drawback that their boiling temperatures are too low with respect of HCFC 141b. As a matter of fact, the HCFC 141b boiling temperature is +32.1°C while those of the three above HFCs are respectively the following: HFC 134a: -26.2°C, HFC 125: -48.1°C, HFC 245fa: +15.3°C. Threfore said HFCs are not usable as drop-in substitutes.

These HFCs have poor solubility in polyols, since they start boiling at the utilization temperature, usually near the room temperature. This limits the use of these compounds as pure foaming agents in most technologies of polymeric foams, in particular polyurethane foams. Using said HFCs there is the drawback that the foams show several defects, for example unhomogeneity, in the foamed polymer structure, with consequent decrease of the material thermoinsulating performances. The Applicant has found, see the comparative Examples, that this takes place also for HFC 245fa, showing a higher solubility in polyols than the other two HFCs, HFC 134a and HFC 125.

As known the polyurethane (PUR) and the polyisocyanurate (PUR/PIR) are the reaction product of polyols with isocyanates.

In USP 5,430,071 it is described a composition for polyurethane foams wherein water is used as co-foaming agent in combination with HFC containing from 1 to 4 carbon atoms and having boiling point lower than 300°K (about 27°C). In the patent as hydrofluorocarbon HFC 134a is exemplified; it is previously liquefied under pressure before being mixed with the polyol to form the polyurethane foam. This process has the drawback to use continuous equipments operating under perssure, therefore having a high cost. Furthermore the HFCs having two carbon atoms, and in particular HFC 134a and HFC 125 as above said, are poor soluble in polyols. See for example A. Albouy "A status report on the development of HFC blowing agents for rigid polyurethane foams", Polyurethanes World Congress '97, pages. 514-523. Therefore it is generally very difficult to retain in the formulation a sufficient amount of said HFCs to obtain foams having the apparent densities required by the market, generally in the range 30-36 Kg/m³. The patent discloses that to obviate the limited amount of foaming agent which dissolves in the polyol it is necessary to add water as HFC co-foaming agent. This is not a suitable route for the substitution of the formulations of the prior art containing HCFC 141b, since the carbon dioxide formed by water reaction with the -NCO groups has a high thermal conductivity value and therefore the thermal insulation of the polyurethane foam is not satisfactory. Besides the carbon dioxide rapidly diffuses from the foams and is substituted by air, having a higher thermal conductivity, whereby the foam thermoinsulating properties rapidly worsen.

The need was felt to have available mixtures of fluids having zero ODP comprising HFC, to be used as substitutes of HFC 141b to obtain polymeric foams, in particular polyurethane foams, having improved thermoinsulating properties, in particular lower thermal conductivity and being, furthermore, drop-in substitutes of HFC 141b.

It has been surprisingly and unexpectedly found by the Applicant a composition comprising hydrofluorocarbons able to solve the above technical problem.

An object of the present invention is a composition to be used as drop-in substitutes of HFC 141b for preparing thermoinsulating polymeric foams, in particular polyurethane foams, comprising the following compounds:
A) hyrofluorocarbons of formula:

   CₙHₘFₚ (A)

   wherein:
   - n is an integer equal to 2 or 3;
   - p is an integer equal to 4 or 5;
   - m + p = 2n + 2 -p;
   when n = 2 p = 4 or 5;
   when n = 3, p = 5;
B) dimethoxymethane, having formula CH₃-O-CH₂-O-CH₃, commercially known as methylal.
   In formula (A):
   - when n = 2 p = 4 the compound has structure CH₂F-CF₃ (HFC 134a);
   - when n = 2 p = 5 the compound has structure CHF₂-CF₃ (HFC 125);
   - when n = 3, p = 5 the compound has structure CF₃-CF₂-CH₃ (HFC 245fa) .

The total amount of foaming agent A) + B) ranges from 4 to 8 parts by weight per 100 parts by weight of polymeric foam; the weight ratio between B) and A) being in the range 0.1-6.5, preferably 0.15-2.8.

In the case of polyurethane foams, the amounts of each component, expressed in moles per 100 parts by weight of polyol are the following:
- A): from 0.010 to 0.160 moles per 100 parts by weight of polyol;
- B): from 0.010 to 0.160 moles per 100 parts by weight of polyol; the sum of the moles of A) + B) per 100 g of polyol being equal to 0.170.

When in formula (A) n = 2 p = 4, preferably the amount by moles of A) and of B) per 100 g of polyol are the following:
- A): from 0.040 to 0.150 corresponding to phr from 4.1 to 15.3.
- B): from 0.030 to 0.130, corresponding to phr from 2.3 to 9.9.

When in formula (A) n = 3, p = 5, preferably the amount by moles of A) and B) per 100 g of polyol are the following:
- A): from 0.070 to 0.125 corresponding to phr from 9.4 to 16.8.
- B): from 0.050 to 0.100, corresponding to phr from 3.8 to 7.6.

It is also possible to use mixtures of the hydrofluorocarbons of formula (A) as above.

Preferably in formula (A) n = 2 p = 4: HFC 134a.

The amount of B is generally from 0.4 parts to 6.9 parts, preferably from 0.7 parts to 5.3 parts, per 100 parts by weight of polymeric foam.

It has been surprisingly and unexpectedly found by the Applicant that methylal, component B), acts as co-foaming agent and to prepare polyurethane foams, when mixed with polyols, solubilizes very high amounts of the above formula (A) compounds.

The present invention mixture gives the following advantages in the polymeric foam preparation. For example, in the preparation of polyurethane foams, it allows to keep in one vessel having a limited resistance to pressure all the compounds used to prepare the foams, except the isocyanate. This is an advantage since the mixture can be kept ready up to the use (discontinuous technology). From an industrial point of view there is a further advantage that said foams can be produced using tanks and equipments not working under pressure and therefore requiring lower investments.

The Applicant has surprisingly and unexpectedly found that it is possible to increase even more the insulating properties of the polymeric foams, and furthermore to limit the decrease in the time of said insulating properties, by adding to the invention composition reduced amounts of fluorinated compounds C), liquid at room temperature.

A further object of the invention is represented by compositions to prepare thermoinsulating foams, in particular polyurethane foams, comprising:
A) hydrofluorocarbons as above;
B) methylal as above;
C) one or more fluorinated compounds, liquid at room temperture and having boiling point from 50°C to 150°C, preferably from 60°C to 130°C, having formula

   R' -R_{f}-R (I)
wherein:
R' is (O)ₙ₀-CₙF₂ₙH, -(O)ₙ₀-CₙH₂ₙ₊₁, n being an integer from 1 to 4, preferably 1 or 2; n0 is equal to 0, 1;
R is: -CₙF₂ₙH, -CₘF₂ₘ₊₁; wherein
   - in the end groups R, R' one fluorine atom is optionally substituted by one chlorine atom;
   - n in R is as above defined in R'; m is an integer from 1 to 3;
R_{f} is:
   - linear or branched perfluoroalkylene having from 2 to 12 carbon atoms, preferably having at least 3 carbon atoms, containing at least one ether oxygen atom, when R_{f} has this meaning n0 in R' is preferably equal to zero;
   - perfluoropolyoxyalkylene comprising units statistically distributed in the chain, the chain being formed of at least two, preferably at least three carbon atoms, said units selected from at least one of the following:
      - (CFXO) wherein X = F or CF₃;
      - (CF₂(CF₂)_{d}O) wherein d is an integer comprised between 1 and 3;
      - (C₃F₆O) ;
   when R_{f} is perfluoropolyoxyalkylene n0 in R' is preferably equal to 1;
   the total amount of C) in per cent by weight with respect to the total amount of A) + B), being from 1.0% to 7,0%, preferably from 1.5% to 6.0%.

The total amount of C) in per cent by weight on the final manufactured article, ranges from 0.07% to 0.55%, preferably 0.09%-0.3%.

In the compositions comprising A), B) and C) the ratios between A) and B) and the total amounts of A) and B) are those above mentioned for binary mixtures.

For polyurethane foams, preferably the total amount of C) ranges from 0.2 to 1.5 phr referred to 100 parts of polyol.

Compounds C) can be prepared according to the methods described in USP 3,704,214, USP 3,715,378, USP 5,969,192 and in the patent application WO 95/32174.

Compounds C) generally have an average molecular weight from 200 to 500, preferably from 230 to 450. When perfluoropolyoxyalkylene polymeric units are present, molecular weight means the number average molecular weight.

The (C₃F₆O) unit in R_{f} of formula (I) has the following meanings: (CF₂CF (CF₃) O) , (CF (CF₃) CF₂O) .

Preferably in formula (I) R is a group selected from the following: -CF₂H, -CF₂CF₂H, -CFHCF₃.

When in formula (I) there is only one hydrogen atom in each end group and R_{f} is a perfluoropolyoxyalkylene, the compounds are known as α,ω-dihydro-perfluoropolyethers.

When in formula (I) R' is alkyl, R is perfluoroalkyl and R_{f} is perfluoroalkylene containing at least one oxygen atom, the compounds are also known as ω-hydro-fluoroethers.

In the fluids of formula (I) preferably R_{f} = (per)fluoropolyether chain with n0 of R' equal to 1, R_{f} preferably has one of the following structures:
1) - (CF₂O)ₐ- (CF₂CF₂O)_{b}-
   when a is different from zero, then b/a is comprised between 0.3 and 10, extremes included; when a is equal to zero b is an integer as defined below;
   R in formula (I) = -CₙF₂ₙH;
2) - (CF₂- (CF₂) _{z'}-CF₂O)_{b'}-
   wherein z' is an integer equal to 1 or 2; b' is as defined below;
3) - (C₃F₆O)ᵣ- (C₂F₄O)_{b}- (CFL₀O)ₜ-
   L₀ = -F, -CF₃;
   when b and t are different from zero r/b = 0.5-2.0, (r+b)/t = 10-30 and all the units having r, b, and t indexes are present;
   or b = t = 0 and r satisfies the proviso indicated below;
   or b = 0 and r and t are different from zero;
a, b, b', r, t, are integers such that, or whose sum is such that the compound of formula (I) containing the bivalent R_{f} radical has boiling point and molecular weight in the above range.

The formula (I) fluids can be selected for example from the following:
- HCF₂O (CF₂CF₂O) _{1,8} (CF₂O) _{1,4}CF₂H
- HCF₂O (CF₂CF₂O) ₂ (CF₂O) _{0,7}CF₂H
- HCF₂O (CF₂CF₂O) ₃ (CF₂O) _{0,4}CF₂H
- CF₃O (CF₂CF₂O) ₂CF₂H
- CF₃O (CF₂CF₂O) ₂ (CF₂O) CF₂H
- CF₃O (CF₂CF (CF₃)O) ₂CF₂H
- HCF₂CF₂O (CF₂CF₂O) CF₂CF₂H
- HCF₂CF₂OCF₂C (CF₃) ₂CF₂OCF₂CF₂H
- CF₃(CF₂)₅OCF₂CF₂H
- CF₃(CF₂)₆OCF₂H
- HCF₂O(CF₂O) (CF₂CF₂O)CF₂H
- HCF₂O (CF₂O) (CF₂CF₂O) ₂CF₂H
- HCF₂O (CF₂CF₂O) ₂CF₂H
- HCF₂O (CF₂O) ₂ (CF₂CF₂O) CF₂H
- CF₃ (CF₂) ₃OCH₃
- CF₃ (CF₂) ₃OC₂H₅
- CF₃ (CF₂) ₆OC₂H₅

Preferably the used compounds are selected from the following:
- HCF₂O (CF₂O) (CF₂CF₂O) CF₂H
- HCF₂O (CF₂O) (CF₂CF₂O)₂CF₂H
- HCF₂O (CF₂CF₂O) ₂CF₂H
- HCF₂O (CF₂O)₂ (CF₂CF₂O) CF₂H
- CF₃ (CF₂) ₃OCH₃ ,
- CF₃ (CF₂) ₃OC₂H₅
- CF₃ (CF₂) ₆OC₂H₅

It is possible to also use mixtures of the compounds C) of formula (I).

Component C) is chemically inert and is soluble in polyols. Compound C) as such has not resulted a foaming agent (see the Examples).

This is surprising since in the prior art it is known for example to use to prepare stiff polyurethane foams, see USP 5,391,584, foaming agents (ex. hydrocarbons, dialkyl ethers, hydrofluorocarbons and hydrofluorochlorocarbons), with unfoaming fluorinated liquids but insoluble in polyols.

From an industrial point of view it is very important to limit the ageing phenomenon of polymeric foams to maintain in the time the insulating power of the manufactured article. The ageing is common to all foamed polymers formed of stiff cells containing thermally insulating gases. For example PURs (polyurethanes), PIRs (polyisocyanurates), XPS (foamed polystyrene), PE (polyethylene), etc. can be mentioned. The ageing is due to the insulating gas loss gradually substituted by air having a higher thermal conductivity value with respect to the initial gas. Therefore the manufactured article properties gradually worsen.

Surprisingly, the addition of C) to compositions A) + B) allows to decrease the thermal conductivity and to limit its increase occurring with the λ-aging.

As said, the addition of B) allows to use in the formulations for polyurethane foams amounts of component A) higher than those usable on the basis of the solubility of the same pure HFCs in the polyols.

The present invention composition can also be used for preparing the thermoplastic foams, for example for materials such as polystyrene and polyethylene.

The amount by weight of the invention composition in the thermosetting foam, for example polyurethane, and thermoplastic foam, is generally in the range 5-10% by weight with respect to the polymer.

As said the polyurethane (PUR) and the polyisocyanurate (PUR/PIR) are the reaction product of polyols with isocyanates. Usually the polyol mixture, at a pressure slightly higher of the atmospheric one, additioned with the additives necessary for the formation of polymeric foams and of the foaming agent (mixture called side b), is mixed with isocyanates (mixture called side a) . The mixing takes place in a mixer providing to pour the reactants (polyols, isocyanates and foaming agent) where it is desired to produce the foam. In a more recent but less used technology, when the foaming agent is poor soluble owing to its low boiling temperature, as in the case of HFC LBBA (Low boiling blowing agents), for example HFC 134a and HFC 125, the foaming agent is fed in the liquid state. In this case it is mixed with polyols at a pressure higher than that atmospheric, to obtain an increase of its solubilization. If this is not compatible with the resistance to pressure of the commonly used storage and feeding lines, it is sent to the mixer separately from the polyols in a suitable feeding line resistant to pressure. This technology allows, with respect to that commonly used to produce polyurethane foams, to solubilize a higher amount of the poor soluble foaming agent, even if in a not yet satisfactory amount.

It is known to prepare a stiff polyurethane (PUR) or polyisocyanurate foam (PUR/PIR) it is necessary to mix the following components:
- Polyols, or their mixtures having hydroxyl number, expressed in mg_{KOH}/g from 300 to 1,000, in particular from 300 to 700, and hydroxyl functionality (hydroxyls number/polyol mole) from 2 to 8, in particular from 3 to 8. Said polyols are described in the prior art and include reaction products of alkylen-oxides, for example ethylene or propylene oxides, with initiators containing from 2 to 8 active hydrogen atoms per molecule. Examples of initiators are: glycerol, trimethylolpropane, triethanolamine, pentaerythrol, sorbitol and saccharose, polyamines and aminoalcohols.
   Polymeric polyols suitable to the purpose can be obtained by condensation reaction in suitable ratios of glycols or polyols having a higher functionality with bicarboxylic or polycarboxylic acids.
   Other polymeric polyols include products having hydroxyl end groups belonging to the classes of polythioethers, polyesteramides, polycarbonates, polyacetals, polyolefins and polyoxysiloxanes.
- Isocyanates: the usable polyisocyanates are for example aliphatic, cycloaliphatic, arilaliphatic and aromatic polyisocyanates. Aromatic diisocyanates such as diphenylmethandiisocyanate (MDI) and its derivatives; polymethylen-polyphenylen-polyisocyanate (polymeric MDI) are of particular importance. Polyisocyanates having functionality from 2.4 to 3.0 and in particular from 2.4 to 2.9 are preferably used. The reaction of polyols with isocyanates forms urethane bonds in the presence of other chemical compounds necessary for the foam formation, among which surfactants and catalysts. When the isocyanate is in excess and in the presence of stoichiometric water, mixed structures of urethane and ureic bonds form, more stiff and fire-resistant (PUR/PIR or polyisocyanurate structures). In the last case the privileged application is the building insulation.
- Surfactants, as for example the usual silicone surfactants and siloxane-oxyalkylene copolymers.
- Catalysts, as for example tin compounds such as for example tin octoates and dibutylen-dilaurate; tertiary amines as dimethyl-cyclohexyl-amine or triethylen-diamine.
- Flame retardants, as for example halogenated alkylphosphates as trichloro-propyl-phosphate.
- H₂O: the water reaction with isocyanate develops CO₂, it is to be summed to the foaming agents contained in the foamed closed cells. The water amount is generally in the range 0.5-2.0 phr, in particular 1.25-1.5 phr for 100 parts by weight of polyols.

The following Examples illustrate the invention with non limitative purposes.

### EXAMPLES

### Primary products used in the Examples

### a) Polyols

The following hydrogenated polyols have been used:
- RN® 490 (Dow Chemical) : polyol polyester having hydroxyl number = 490 mg KOH/g.
- RF555 (®) /R 532 (®) (Dow Chemical): polyol polyester having hydroxyl number = 500 mg KOH/g. Tercarol® G 310 (Enichem): polyol polyether having an hydroxyl number = 600 mg KOH/g.
- Tercarol® G 600 (Enichem): polyol polyether having an hydroxyl number = 290 mg KOH/g.
- Isoexter® 4530 (Coim): aromatic polyol polyester having an hydroxyl number = 510 mg KOH/g.
- Isoexter® 3340 (Coim): aliphatic-aromatic polyol polyester having a hydroxyl number = 360 mg KOH/g.
- Glendion® RS 0700 (Enichem): polyol polyester having an hydroxyl number = 490 mg KOH/g.

### b) Silicone surfactants

- Tegostab® B8465 and B8469 (Goldschmidt) polysiloxane-polyoxyalkylenalkylate copolymer.
- RT® 0073 (Cem. Spec.) polysiloxane-polyoxyalkylenalkylate copolymer.

### c) Catalysts

- Policat® 8 (Air Product) DMCEA (dimethylcyclohexylamine) .
- Policat® 5 (Air Product) PMDETA (pentamethyl diethylen triamine).

### d) Physical blowing agents

- HFC 134a (Ausimont S.p.A.) CH₂F-CF₃.
- HFC 245fa (Honeywell) CF₃-CF₂-CH₃
- Methylal (Methylal) or dimethoxymethane (Lambiotte & Cie S.A.)

### e) Polyisocyanates

MDI Tedimon® 385 (Enichem SpA) polymeric isocyanate with NCO % = 30.5, average functionality = 2.8.

### Phisical determinations on the polyurethane foam

- Apparent density: ISO 845 method.
- Thermal conductivity (X or k-factor): ISO 8301 and ASTM C518 methods.
   The determination has been carried out after conditioning for one day at 23°C and 50% of relative humidity. The maximum difference between the determination value and the real value is not higher as absolute value than 0.20 mW/m.°K.
- Anlysis of the HFC 134a gas contained in the closed cells: gaschromatographic determination.
   A cylindrical foam specimen having a volume of about 10 cm³ is introduced into a suitably metal built syringe with needle. The sample is then pressed with the syringe plunger and the outflowing gas is introduced into a spiral sample holder for gaschromatograph. The used column is of steel (6.35 mm of external diameter and 1 meter long) and is packed with Porapak®Q and conditioned at 100°C for 24 hours. As transport gas helium is used. The gaschromatograph detector is at thermal conductivity. The calibration is carried out with a mixture having a known composition HFC 134a + methylal. The analysis result is expressed in % by weight of the ratio HFC 134a/(HFC 134a + methylal).
- Determination of the cell sizes and of the cellular size distribution by Scanning Electron Microscopy (SEM).
   Thin sections of a representative foam zone are cut out so as to obtain surfaces having area of some cm². The cutting operation produces surfaces on which a distribution of open cells having a beehive structure can be noticed. On the surface an atomized metal is sprayed so as to have a thickness of 20 nm. The samples are then analyzed by SEM.

### General process for the preparation of the polyurethane foam

The general process for the laboratory preparation of polyurethane and polyisocyanurate foams is described in "Polyurethanes Chemistry and Technology" Volumes I, II, Saunders and Frisch, 1962, John Wiley and Sons, New Jork, N.J.

150 grams of polyols have been additivated and mixed, without particular cautions, in an open vessel with surfactants, catalysts, H₂O and dimethoxymethane (methylal) at the concentrations reported in Tables I, III, V, VII and IX.

The H₂O, HFC and dimethoxymethane amounts reported in the Tables have been calculated for obtaining foams having an apparent density of about 35 Kg/m³, a density in the commercial foam range (30-36 Kg/m³) .

The so obtained mixture of polyols with the other above mentioned components, HFC excluded, was introduced in a cylinder resistant to pressure, having a 200 ml volume and equipped with two inlet and outlet needle valves, with equal resistance to pressure. The closed cylinder and its content have been cooled at -20°C overnight.

The cylinder was then taken and immediately a vacuum of 30 mm Hg (4 KPa) was made inside by a vacuum pump.

The cylinder was connected with a thin loading ramp, then placed on a balance and weighed. The free loading ramp end was then connected to a second cylinder containing HFC, which was transferred in the firt cylinder for the combined effect of the pressure and temperature difference beetween the two cylinders. It was determined by weighing the amount of the foaming agent HFC introduced in the first cylinder containing the mixture of polyols, surfactants, catalysts, H₂O and methylal. H₂O is known in the art as "chemical foaming agent" since it reacts with isocyanate forming CO₂. The total CO₂, HFC and methylal moles are constant for all the Examples and equal to 0.254 moles per 100 grams of polyol. In Examples 2-6 and 19-22, according to the invention, the HFC 134a and HFC 245fa amount respectively has been progressively increased and consequently that of methylal decreased.

The cylinder content was manually stirred more times and then let condition at room temperature for 24 hours.

120 grams of the so prepared liquid mixture were then poured in a cylindrical polyethylene vessel put under the environment conditions and having 12 cm diameter and 18 cm height. The polyisocyanate was added to the liquid according to ratios by weight indicated in the Tables I, III, V, VII and IX and then was subjected to mechanical mixing for 15 seconds with a metal blade shaft, at 1,900 rpm.

The mixture was then let freely foam until reaching the maximum volume, i.e. until a further foam blowing occurred.

The obtained foam was let mature at 70°C overnight to complete the crosslinking reactions. The specimen was then cooled at room temperature for some hours. From the polyethylene vessel some foam samples were taken for the preparation of the specimens to be submitted to the physical, mechanical and chemical characterization reported in the Tables II, IV, VI, VIII, X.

### EXAMPLE 1 (comparative)

In this Example as physical foaming agent only methylal has been used.

The composition is reported in Table I. The effected physical determinations are reported in Table II.

### EXAMPLES 2-6

In these Examples a mixture of HFC 134a + methylal has been used.

The compositions are reported in Table I. In Table II the physical determinations carried out.

By using the above described SEM method significant differences of the cell sizes in the polyurethane foams obtained in Examples 2-6 with respect to the foam of the Example 1 comparative, have not been found.

### EXAMPLE 7 (comparative)

The Example has been carried out according to the above foam preparation general process, except that methylal was not added to polyols before the foaming reaction. The formulaion is reported in Table I.

It has been noticed that the liquid mixture after addition of polyisocyanates did not produce foam and did not show any foaming.

### Comment to the Table II

Table II shows that the increase of HFC 134a with respect to methylal in the compositions, the total moles CO₂ + methylal + HFC 134a being equal, gives a decrease of the foam thermal conductivity. Besides, although HFC 134a has a low boiling temperature (-26.1°C), the foaming agent percentage contained in the foam cell gas is substantially identical to that used for its preparation. This shows that during the liquid mixture preparation and during foaming HFC 134a is not lost.

### EXAMPLES 8-10

### Preparation of the polyurethane foam by adding α,ω di-hydro-perfluoropolyethers to the liquid mixture containing polyol

A mixture of α,ω di-hydro-perfluoropolyethers H-Galden®, called H-Galden® B, having average molecular weight 325 and average boiling temperature of 94.4°C has been used.

For the foam preparation the above described process for the Examples 2-6 has been used, with the difference that the mixture of α,ω di-hydro-perfluoropolyethers has been added by mixing it with polyols, surfactants, catalysts, methylal and H₂O at the concentrations reported in the following Table III, before the HFC 134a addition.

The H₂O, methylal and HFC 134a amounts reported in Table III have been calculated to obtain foams having an apparent density of about 35 Kg/m³. The H-Galden amounts reported in Table III have been dosed so as to obtain concentrations from about 0.1% to about 0.3% by weight of the compound on the manufactured article of final foam polyurethane.

The specimens of the Examples 9-10 have been prepared in this way. The specimen obtained according to the Example 8, not containing H-Galden® B, has been considered the reference specimen.

The cell size measurements have shown that the specimens of Examples 8-10 have a regular and homogeneous cellular structure without appreciable variations among the tested specimens.

The density and conductivity measurements carried out at different times, of the foams corresponding to the compositions 8-10 are reported in Table IV.

### Comments to the data of Table IV

From Table IV one deduces that the foam obtained in the presence of α, ω di-hydro-perfluoropolyethers shows a conductivity lower than that of the reference specimen and that said difference is maintained also on the specimens conditioned for the whole time considered (35 days).

### EXAMPLE 11 (comparative)

### Repetition of the preparation of the liquid mixture of the Example 10 but using an α,ω di-hydro-perfluoropolyether having an average boiling temperature higher than 150°C

The preparation as described for the Example 10 (concentration H-Galden® 0.84 phr on the polyol) has ben repeated, but using a α,ω di-hydro-perfluoropolyether having an average boiling temperature of 178°C.

The obtained final manufactured article showed an unhomogeneous aspect owing to the reactant demixing. Besides, the cellular structure showed big holes, very large and unhomogeneous cells. The manufactured article was not commercially usable.

### EXAMPLE 12 (comparative)

Preparation of a foam starting from the mixture methylal + HFC 134a of Example 8, by adding the mixture of α,ω di-hydro-perfluoropolyethers having an average boiling temperature of 94.4°C (H Galden®B) at a concentration 2.9 phr (upper limit 1.5 phr) on the polyol and of 1% by weight on the final polyurethane manufactured article.

A polyurethane was prepared at the above concetration of α,ω di-hydro-perfluorpolyether b.p. 94°C.

The thermal conductivity value obtained on the final manufactured article is 27.5 mW/m.°K after 1 day at 23°C and relative humidity 50%. This value is higher of at least 1 mW/m.°K than the values indicated in Table IV for the Examples 9-10.

### EXAMPLES 13-15

### Polyurethane foam preparation by adding ω hydro-fluoroethers to a liquid mixture containing polyol and the composition methylal + HFC 134a of the Example 8

To the mixture methylal + HFC 134a have been added, for each of the considered Examples, respectively each of the following ω hydro-fluoroethers:
- C₄F₉-O-CH₃, Tb = 60°C (HFE® 7100, m.w. 250);
- C₄F₉-O-C₂H₅, Tb = 80°C (HFE® 7200, m.w. 264);
- (C₃F₇)₂-CF-O-C₂H₅, Tb = 128°C (HFE® 7500, m.w. 414).

The obtained compositions are reported in Table V.

The composition of the Example 8 is reported in Table III and in Table IV the physical properties of the obtained foam.

The physical characterizations, comprising the conductivity measurements carried out at different times, of the foams obtained with the Examples 13-15 are reported in Table VI. The cell size measurements have shown that the specimens of the Examples 13-15 have a regular and homogeneous cellular structure without significant variations both among the specimens and the reference specimen of the Example 8.

### Comments to Table VI

From Table VI it is deduced that the foam obtained with the compositions containing ω hydro-fluoroethers of the Examples 13-15 shows a conductivity lower than that of the reference specimen of the Example 8 (Table IV). Besides, said difference is maintained for all the successive conditioning times.

### EXAMPLES 16-17 (comparative)

Repetition of the prreparation of the liquid mixture of the Examples 14-15 but by using a concentration of ω-hydrofluoroethers equal to 2.9 phr on the polyol and 1% on the final polyurethane manufactured article.

The following ω-hydro-fluoroethers have been used:
- C₄F₉-O-C₂H₅, Tb = 80°C (HFE® 7200) ;
- (C₃F₇)₂-CF-O-C₂H₅, Tb = 128°C (HFE® 7500)

Polyurethanes at the above mentioned concentration of ω-hydrofluoroether have been prepared.

It has been observed that the thermal conductivity value obtained on the final manufactured article after 1 day at 23°C and relative humidity 50% in both cases is 27.0 mW/m.°K and therefore higher than that of the specimen of the Example 14 (25.3) and of the Example 15 (25.5), respectively.

### EXAMPLE 18 (comparative)

### Determination of the HFC 134a solubility in the polyols used in the Examples (RN490, Tercarol G310, Tercarol G600, Isoexter 4530, Isoexter 3340, Glendium RS 0700)

The determination was carried out for each polyol at the temperature of 25°C.

One operates as in the Example 1 but by feeding in the first cylinder only polyol.

After having conditioned at 25°C the cylinder containing the polyol additioned with HFC 134a, it is vented to the air.

From the weight increase one deduces the HFC 134a amount remained dissolved.

It has been found that the HFC 134a amount which solubilizes corresponds to 3.4 phr per 100 g of polyol.

### Comments on the Example 18 (comparative)

On the basis of the HFC 134a solubility in the polyols, under the experimental conditions used in the invention Examples, it is not possible to prepare a foam having a HFC 134a content higher than 3.4 phr.

### EXAMPLE 19 (comparative)

### Preparation of a polyurethane foam according to the general method by adding as foaming agent only HFC 245fa without methylal

The liquid mixture composition is reported in Table VII and in Table VIII the physical characterization of the obtained foam.

The obtained foam shows a too high density, structure unhomogeneity, zones wherein reactant demixing is observed. It is noticed furthermore the hollow presence.

These defects make the manufactured article commecially unusable.

### EXAMPLE 20 (comparative)

### Preparation of polyurethane foams starting from a liquid mixture of HFC 245fa and methylal wherein methylal is lower than the limits.

The formulation is reported in Table VII and in Table VIII the physical characterization of the obtained foam.

The same defects reported for the Example 19 comp. have been found.

### EXAMPLES 21-22

### Foam preparation starting from liquid mixtures containing HFC 245fa and methylal

The formulations are reported in Table VII, in Table VIII the physical characterization of the obtained foam.

### Comment to Table VIII

The Table shows that in absence of methylal or with a methylal amount in the liquid mixture lower than the limits, the obtained foams are unhomogeneous and have a very high density. It is noticed that by increasing the ratio by weight methylal/HFC 245fa the foam morphology becomes regular and without defects.

### EXAMPLES 23-25

### Preparation of polyurethane foams by using the formulation of Example 22 and adding respectively hydrofluoroethers H-Galden®B or H-Galden®C

The process described for the Examples 8-10 has been followed.

The hydrofluoroether H-Galden®B characteristics have been described in the Example 8.

H-Galden®C is a mixture of α,ω·di-hydro-perfluoropoliethers having average molecular weight 416 and average boiling temperature of 125.0°C.

The formulations are reported in Table IX and the physical and thermal characterizations in Table X.

### Comment to Table X

Table X shows that the addition of H-Galden to the formulation of the Example 22 containing methylal and HFC 245fa improves the thermoinsulating characteristics in the time of the obtained foams.

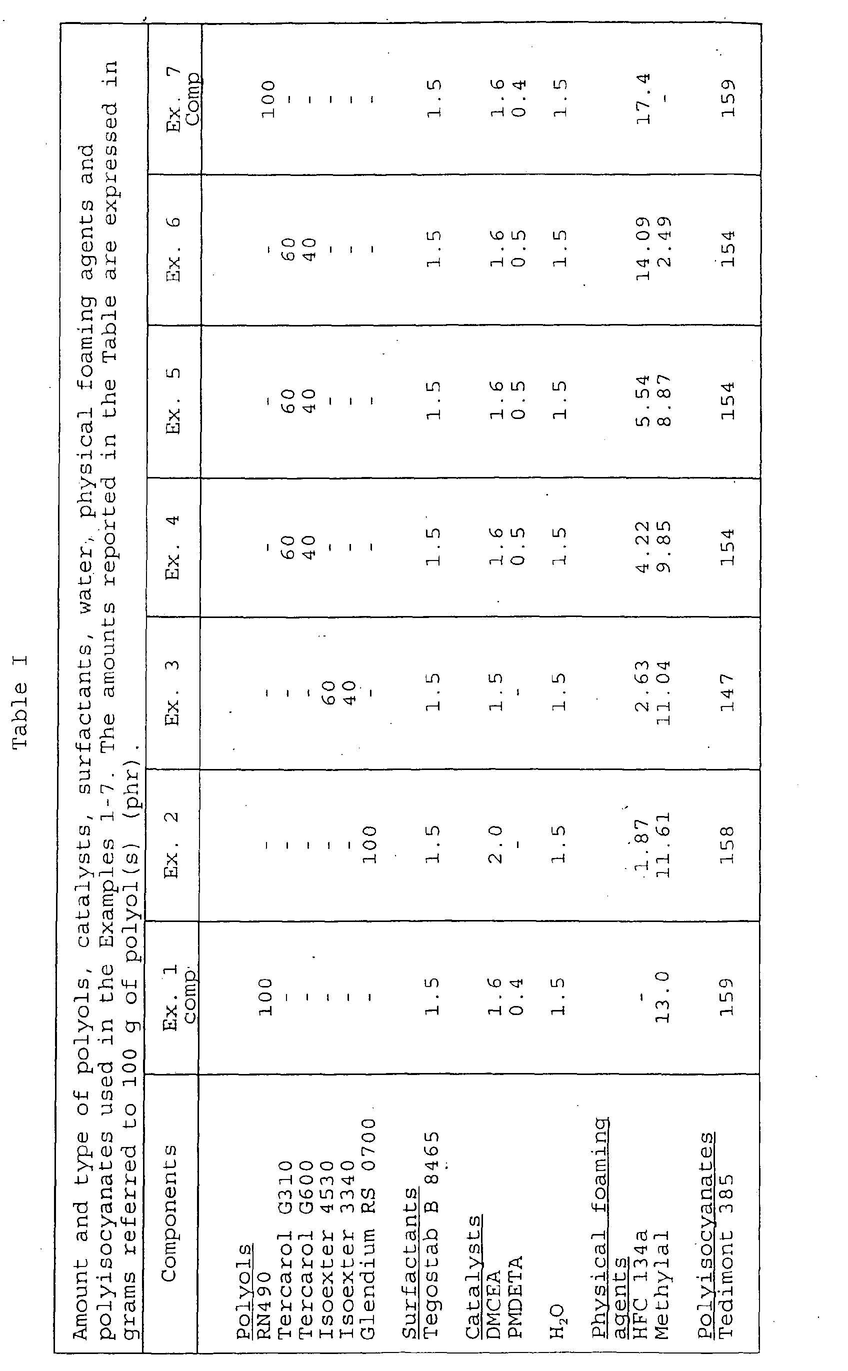

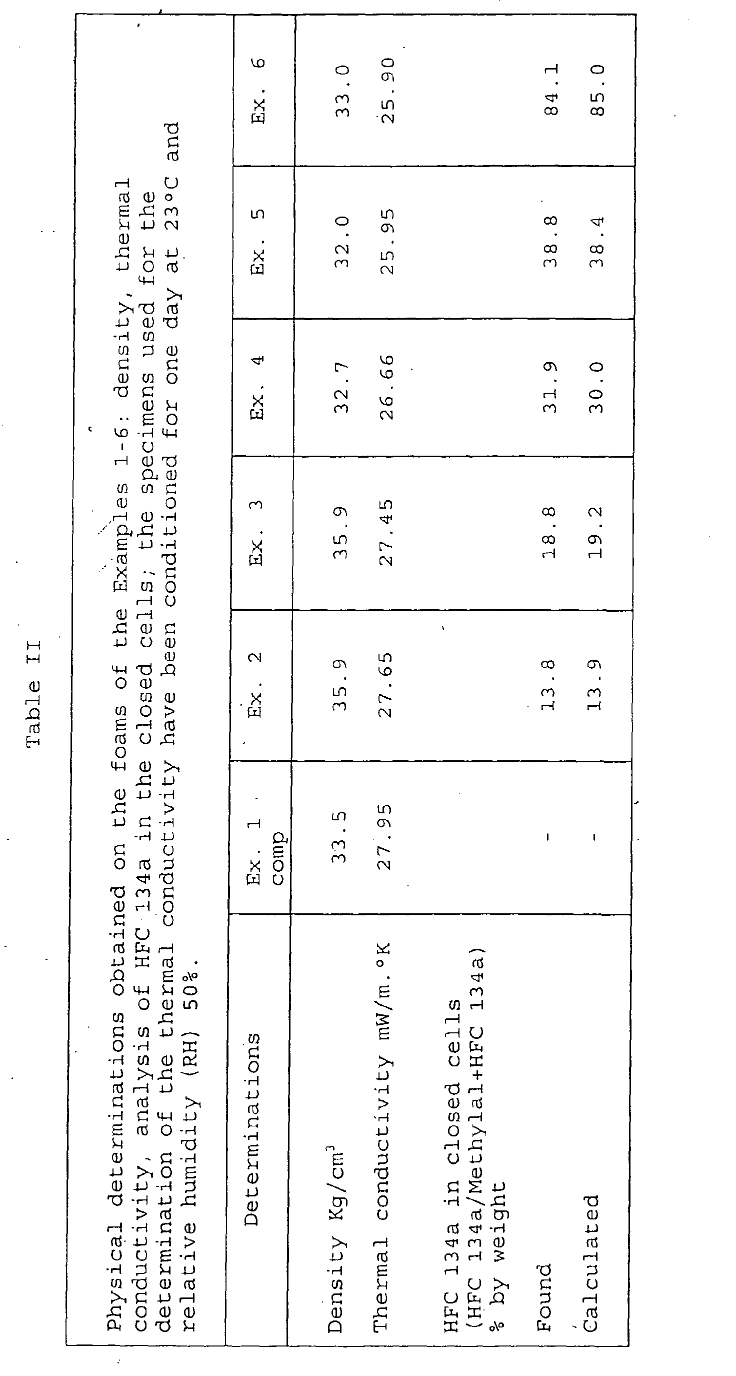

**Table III**

| Amount and type of polyols, catalysts, surfactants, water, physical foaming agents and polyisocyanates used in the Examples 8-10: The amounts reported in the Table, where not otherwise specified, are expressed in grams referred to 100 g of polyol(s) (phr). | | | |
|---|---|---|---|
| Components | Ex. 8 ref. | Ex. 9 | Es. 10 |
| | | | |
| Polyols | | | |
| Tercarol G310 | 100 | 100 | 100 |
| | | | |
| Surfactants | | | |
| Tegostab B 8465 | 1.6 | 1.6 | 1.6 |
| | | | |
| Catalysts | | | |
| DMCEA | 1.4 | 1.4 | 1..4 |
| PMDETA | 0.4 | 0.4 | 0.4 |
| | | | |
| H₂O | 1.5 | 1.5 | 1.5 |
| | | | |
| Physical foaming agents | | | |
| HFC 134a | 5.5 | 5.5 | 5.5 |
| Methylal | 8.9 | 8.9 | 8.9 |
| | | | |
| H-Galden B | - | 0.28 | 0.84 |
| | | | |
| Polyisocyanates | | | |
| Tedimont 385 | 159 | 159 | 159 |
| | | | |
| H-Galden/polyurethane final manufactured article | - | 0 . 1 | 0 . 3 |
| | | | |
| % by weight | | | |

**Table IV**

| Physical determinations on the foams of the Examples 8-10: density and thermal conductivity; the specimens used for the determination of the thermal conductivity have been conditioned at 23°C and relative humidity 50%. (The respective compositions are reported in Table III) | | | |
|---|---|---|---|
| Determinations | Ex. 8 rif. | Ex. 9 | Ex. 10 |
| | | | |
| Density Kg/cm³ | 33.4 | 32.7 | 33.4 |
| | | | |
| Thermal conductivity mW/m.°K | | | |
| - after 1 day | 26.4 | 24.9 | 25.3 |
| - after 2 days | 27.5 | 25.6 | 25.9 |
| - after 5 days | 28.9 | 27.2 | 27.7 |
| - after 7 days | 29.7 | 28.1 | 28.5 |
| - after 9 days | 30.1 | 28.7 | 28.9 |
| - after 12 days | 30.7 | 29.6 | 29.7 |
| - after 28 days | 31.6 | 30.0 | 30.2 |
| - after 35 days | 31.6 | 30.0 | 30.2 |

**Table V**

| Amount and type of polyols, catalysts, surfactants, water, physical foaming agents and polyisocyanates used in the Examples 13-15. The amounts reported in the Table, where not differently specified, are expressed in grams referred to 100 g of polyol(s) (phr). | | | |
|---|---|---|---|
| Components | Ex. 13 | Ex. 14 | Ex. 15 |
| | | | |
| Polyols | | | |
| Tercarol G310 | 100 | 100 | 100 |
| | | | |
| Surfactants | | | |
| Tegostab B 8465 | 1.6 | 1.6 | 1.6 |
| | | | |
| Catalysts | | | |
| DMCEA | 1.4 | 1.4 | 1.4 |
| PMDETA | 0.4 . | 0.4 | 0.4 |
| | | | |
| H₂O | 1.5 | 1.5 | 1.5 |
| | | | |
| Physical foaming agents | | | |
| HFC 134a | 5.5 | 5.5 | 5.5 |
| Methylal | 8.9 | 8.9 | 8.9 |
| | | | |
| HFE 7100 | 0.28 | - | - |
| HFE 7200 | - | 0.28 | - |
| HFE 7500 | - | - | 0.84 |
| | | | |
| Polyisocyanates | | | |
| Tedimont 385 | 159 | 159 | 159 |
| | | | |
| HFE/polyurethane final manufactured article | 0,1 | 0,1 | 0.3 |
| | | | |
| % by weight | | | |

**Table VI**

| Physical determinations on the foams of the Examples 13-15: density and thermal conductivity; the specimens used for the determination of the thermal conductivity have been conditioned at 23°C and relative humidity 50%. The reference data are those of Example 8 (Table IV). | | | |
|---|---|---|---|
| Determinations | Ex. 13 | Ex. 14 | Ex. 15 |
| | | | |
| Density Kg/cm³ | 33.6 | 33.4 | 34.3 |
| | | | |
| Thermal conductivity mW/m.°K | | | |
| - after 1 day | 25.9 | 25.3 | 25.5 |
| - after 2 days | 26.5 | 25.9 | 26.0 |
| - after 5 days | 27.9 | 27.3 | 27.4 |
| - after 7 days | 28.7 | 28.1 | 28.2 |
| - after 9 days | 29.1 | 28.5 | 28.6 |
| - after 12 days | 29.7 | 29.1 | 29.2 |
| - after 28 days | 30.6 | 30.0 | 30.1 |
| - after 35 days | 30.6 | 30.0 | 30.1 |

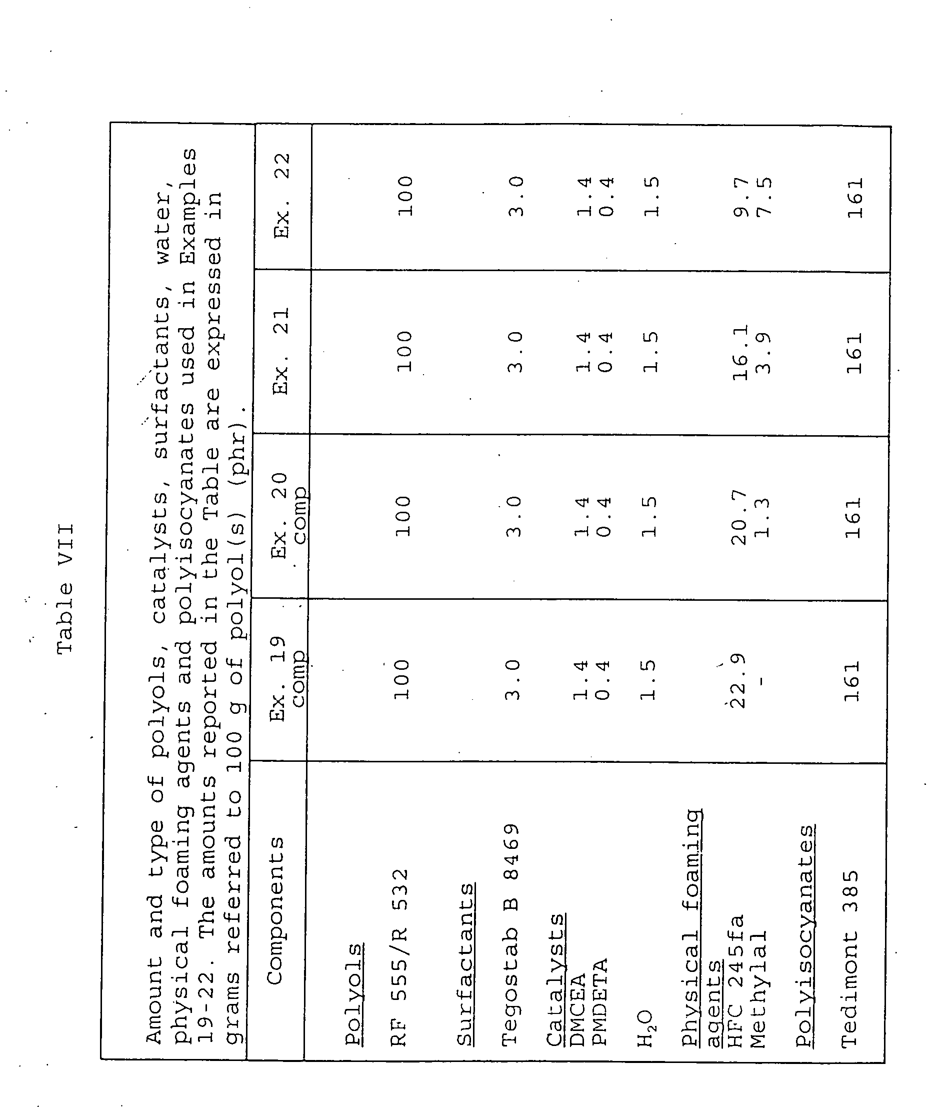

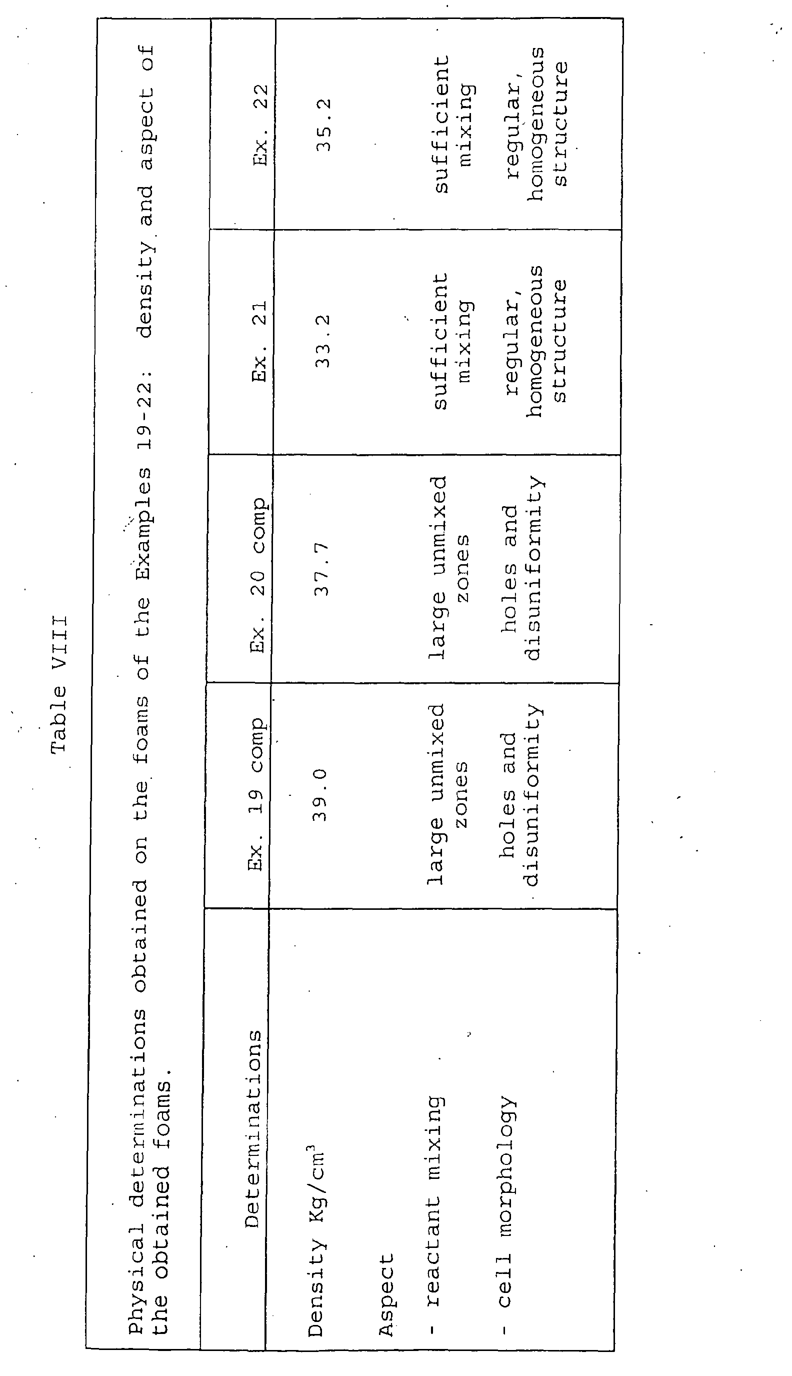

**Table IX**

| Amount and type of polyols, catalysts, surfactants, water, physical foaming agents and polyisocyanates used in the Examples 22-25. The amounts reported in the Table are expressed in grams referred to 100 g of polyol(s) (phr). | | | | |
|---|---|---|---|---|
| Components | Ex. 22 ref. | Ex. 23 | Ex. 24 | Ex. 25 |
| | | | | |
| Polyols | | | | |
| RF 555/R 532 | 100 | 100 | 100 | 100 |
| | | | | |
| Surfactants | | | | |
| Tegostab B 8469 | 3.0 | 3.0 | 3.0 | 3.0 |
| | | | | |
| Catalysts | | | | |
| DMCEA | 1.4 | 1.4 | 1.4 | 1.4 |
| PMDETA | 0.4 | 0,4 | 0.4 | 0.4 |
| | | | | |
| H₂O | 1.5 | 1.5 | 1.5 | 1.5 |
| | | | | |
| Physical foaming agents | | | | |
| HFC 245fa | 9.7 | 9.7 | 9.7 | 9.7 |
| Methylal | 7.5 | 7.5 | 7.5 | 7.5 |
| | | | | |
| H-Galden®B | - | 0.28 | 0.84 | - |
| H-Galden®C | - | . - | - | 0.28 |
| | | | | |
| Polyisocyanates | | | | |
| Tedimont 385 | 161 | 161 | 161 | 161 |
| H-Galden/polyurethane final manufactured article | - | 0.1 | 0.3 | 0.1 |
| % by weight | | | | |

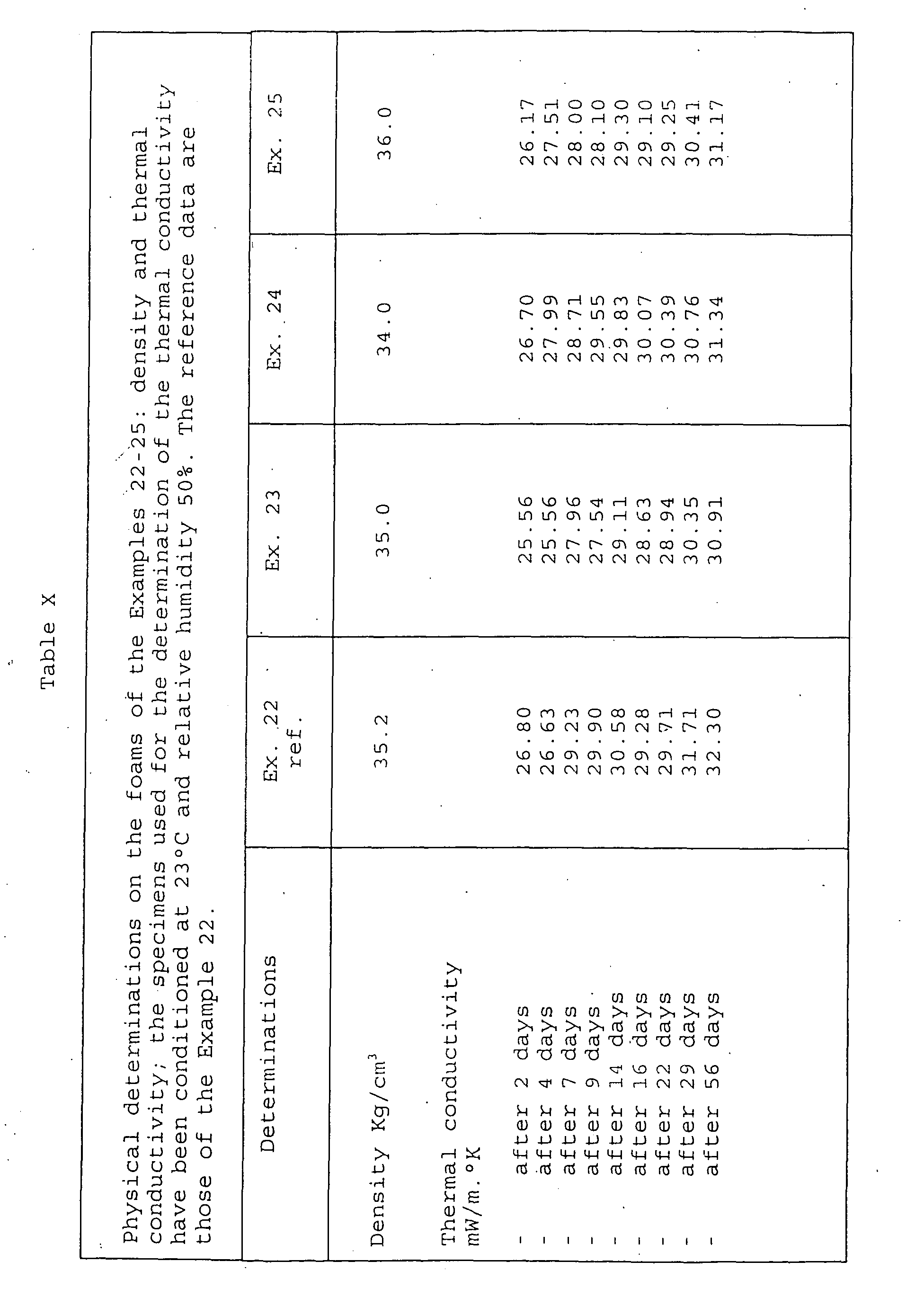

## Claims

1. Composition to be used as drop-in substitutes of HFC 141b for preparing thermoinsulating polymeric foams, in particular polyurethane foams, comprising the following compounds:
A) hydrofluorocarbons of formula:
CₙHₘFₚ (A)
wherein:
- n is an integer equal to 2 or 3;
- p is an integer equal to 4 or 5;
- m + p = 2n + 2 -p;
when n = 2, p = 4 or 5;
when n = 3, p = 5;
B) dimethoxymethane, having formula CH₃-O-CH₂-O-CH₃, known as methylal.

2. Composition according to claim 1, wherein in formula (A) :
- when n = 2₀ p = 4 the compound has structure CH₂F-CF₃ (HFC 134a);
- when n = 2 p = 5 the compound has structure CHF₂-CF₃ (HFC 125) ;
- when n = 3, p = 5 the compound has structure CF₃-CF₂-CH₃ (HFC 245fa).

3. Composition according to claims 1-2, wherein the total amount of foaming agent A) + B) ranges from 4 to 8 parts by weight per 100 parts by weight of polymeric foam; the weight ratio between B) and A) being in the range 0.1-6.5, preferably 0.15-2.8.

4. Composition according to claims 1-3, wherein for polyurethane foams, the amounts of each component, expressed in moles per 100 parts by weight of polyol are the following:
- A): from 0.010 to 0.160 moles per 100 parts by weight of polyol;
- B): from 0.010 to 0.160 moles per 100 parts by weight of polyol;
the sum of the moles of A) + B) per 100 g of polyol being equal to 0.170.

5. Composition according to claims 1-4, wherein when in formula (A) n = 2 p =4, the amount by moles of A) and of B) per 100 g of polyol are respectively the following:
- A): from 0.040 to 0.150,
- B): from 0.030 to 0.130.

6. Composition according to claims 1-4, wherein, when in formula (A) n = 3, p = 5, the amount by moles of A) and B) per 100 g of polyol are the following:
- A): from 0.070 to 0.125,
- B): from 0.050 to 0.100.

7. Composition according to claims 1-6, wherein mixtures of hydrofluorocarbons of formula (A) as above are used.

8. Composition according to claims 1-7, wherein in formula (A) n = 2 p = 4: HFC 134a.

9. Composition according to claims 1-8 comprising:
A) hydrofluorocarbons according to claims 1-8;
B) methylal according to claims 1-8;
C) one or more fluorinated compounds, liquid at room temperture and having boiling point from 50°C to 150°C, preferably from 60°C to 130°C, and having formula
R'-R_{f}-R (I)
wherein:
R' is - (O) ₙ₀ - CₙF₂ₙH, - (O) ₙ₀ - CₙH₂ₙ₊₁, n being an integer from 1 to 4, preferably 1 or 2; n0 is equal to 0, 1;
R is : -CₙF₂ₙH, -CₘF₂ₘ₊₁; wherein
- in the end groups R, R' one fluorine atom is optionally substituted by one chlorine atom;
- n in R is as defined in R'; m is an integer from 1 to 3;
R_{f} is:
- linear or branched perfluoroalkylene having from 2 to 12 carbon atoms, preferably having at least 3 carbon atoms, containing at least one ether oxygen atom, when R_{f} has this meaning n0 in R' is preferably equal to zero;
- perfluoropolyoxyalkylene comprising units statistically distributed in the chain, the chain being formed of at least two, preferably at least three carbon atoms, said units selected from at least one of the following:
- (CFXO) wherein X = F or CF₃;
- (CF₂(CF₂)_{d}O) wherein d is an integer comprised between 1 and 3;
- (C₃F₆O) ;
when R_{f} is perfluoropolyoxyalkylene n0 in R' is preferably equal to 1;
the total amount of C) in per cent by weight with respect to the total amount of foaming agents A) + B), being from 1.0% to 7.0%, preferably from 1.5% to 6.0%.

10. Composition according to claim 9, wherein the total amount of C) in per cent by weight on the final manufactured article, ranges from 0.07% to 0.55%.

11. Composition according to claims 9-10, wherein for polyurethane foams the total amount of C) is from 0.2 to 1.5 phr referred to 100 parts of polyol.

12. Compositions according to claims 9-11, wherein the compounds C) have an average molecular weight from 200 to 500, preferably from 230 to 450.

13. Composition according to claims 9-12, wherein the (C₃F₆O) unit in R_{f} of formula (I) has the following meanings: (CF₂CF(CF₃) O) , (CF (CF₃) CF₂O) .

14. Composition according to claims 9-13, wherein in formula (I) R is a group selected from the following: -CF₂H, - CF₂CF₂H, -CFHCF₃.

15. Composition according to claims 9-14, wherein, in formula (I), when R_{f} = (per)fluoropolyether chain with n0 of R' equal to 1, R_{f} has one of the following structures:
1) - (CF₂O)ₐ- (CF₂CF₂O)_{b}-
when a is different from zero, then b/a is comprised between 0.3 and 10, extremes included; when a is equal to zero b is an integer as defined below;
R in formula (I) = -CₙF₂ₙH;
2) - (CF₂- (CF₂) _{z'}-CF₂O)_{b'}-
wherein z' is an integer equal to 1 or 2; b' is as defined below;
3) - (C₃F₆O)ᵣ- (C₂F₄O)_{b}- (CFL₀O)ₜ-
L₀ = -F, -CF₃;
when b and t are different from zero r/b = 0.5-2.0, (r+b)/t = 10-30 and all the units having r, b, and t indexes are present;
or b = t = 0 and r satisfies the proviso indicated below;
or b = 0 and r and t are different from zero;
a, b, b', r, t, are integers such that, or whose sum is such that the compound of formula (I) containing the bivalent R_{f} radical has boiling point and molecular weight in the above range.

16. Composition according to claims 9-15, wherein the compounds of formula (I) are selected from the following:
- HCF₂O (CF₂CF₂O)_{1,8} (CF₂O) _{1,4} CF₂H
- HCF₂O (CF₂CF₂O) ₂ (CF₂O) _{0,7}CF₂H
- HCF₂O (CF₂CF₂O) ₃ (CF₂O) _{0,4}CF₂H
- CF₃O (CF₂CF₂O) ₂CF₂H
- CF₃O (CF₂CF₂O) ₂ (CF₂O) CF₂H
- CF₃O (CF₂CF (CF₃) O) ₂CF₂H
- HCF₂CF₂O (CF₂CF₂O) CF₂CF₂H
- HCF₂CF₂OCF₂C (CF₃) ₂CF₂OCF₂CF₂H
- CF₃(CF₂) ₅OCF₂CF₂H
- CF₃ (CF₂) ₆OCF₂H
- HCF₂O (CF₂O) (CF₂CF₂O) CF₂H
- HCF₂O (CF₂O) (CF₂CF₂O) ₂CF₂H
- HCF₂O (CF₂CF₂O) ₂CF₂H
- HCF₂O (CF₂O) ₂ (CF₂CF₂O) CF₂H
- CF₃ (CF₂) ₃OCH₃
- CF₃ (CF₂) ₃OC₂H₅
- CF₃ (CF₂) ₆OC₂H₅

17. Composition according to claim 16, wherein the used compounds are selected from the following: HCF₂O (CF₂O) (CF₂CF₂O) CF₂H, HCF₂O (CF₂O) (CF₂CF₂O) ₂CF₂H, HCF₂O (CF₂CF₂O) ₂CF₂H, HCF₂O (CF₂O) ₂ (CF₂CF₂O) CF₂H, CF₃ (CF₂) ₃OCH₃ , CF₃ (CF₂) ₃OC₂H₅ , CF₃ (CF₂) ₆OC₂H₅

18. Polymeric foams, preferably polyurethane foams, containing, as per cent by weight on the total, from 5 to 10% of the compositions of claims 1-17.

19. Use of the compositions according to claims 1-17 to prepare polymeric foams, preferably polyurethane foams.
